**Europäisches Patentamt**

**European Patent Office**

**Office européen des brevets**

(19)

(11) Veröffentlichungsnummer : **0 026 857**
**B1**

(12) **EUROPÄISCHE PATENTSCHRIFT**

(45) Veröffentlichungstag der Patentschrift :
22.09.82

(21) Anmeldenummer : 80105526.0

(22) Anmeldetag : 15.09.80

(51) Int. Cl.³ : **C 09 K   3/28**, C 08 K   3/32,
C 09 D   5/18

(54) Flammwidrige schäumbare Formmassen, Verfahren zu ihrer Herstellung und ihre Verwendung.

(30) Priorität : 26.09.79 DE 2938874

(43) Veröffentlichungstag der Anmeldung :
15.04.81 (Patentblatt 81/15)

(45) Bekanntmachung des Hinweises auf die Patenterteilung : 22.09.82 Patentblatt 82/38

(84) Benannte Vertragsstaaten :
BE DE FR GB IT NL SE

(56) Entgegenhaltungen :
DE B 1 061 011
GB A 1 095 857

(73) Patentinhaber : BAYER AG
Zentralbereich Patente, Marken und Lizenzen
D-5090 Leverkusen 1, Bayerwerk (DE)

(72) Erfinder : von Bonin, Wulf, Dr.
Mendelssohnstrasse 30
D-5090 Leverkusen 1 (DE)

Imprimerie Jouve, 18, rue St-Denis, 75001 Paris, France

**0 026 857**

Flammwidrige schäumbare Formmassen, Verfahren zu ihrer Herstellung und ihre Verwendung

Die vorliegende Erfindung betrifft flammwidrige schäumbare Formmassen, die allgemein unter der Bezeichnung « Intumeszenzmittel » bekannt sind, mit Ethylendiammoniumphosphat als Katalysator.

Unter Intumeszenzmittel im Sinne der Erfindung sollen solche Stoffe verstanden werden, die bis zu Temperaturen von 150 °C nicht schäumen, aber bei höheren Temperaturen, vorzugsweise über 180 °C, Blasen bilden, aufschäumen und einen vielzelligen flammhemmenden Schaum erzeugen.

Intumeszenzmittel bestehen im allgemeinen aus

1. einem sogenannten Karbonific, d.h. einer Kohlenstoffquelle,
2. einem « Katalysator » als Borsäure- oder vorzugsweise Phosphorsäurequelle und
3. einem Treibmittel als Quelle nicht entflammbarer Gase.

Als (1) Karbonific können allgemein solche Stoffe verwendet werden, die in der Lage sind, das Kohlenstoffgerüst für den wärmedämmenden Schaum bereitzustellen, also z.B. Kohlenhydrate oder mehrwertige Alkohole wie Zucker, Stärke, Kasein, Pentaerythrit, Di- und Tripentaerythrit. Ein wirksames Karbonific soll eine große Anzahl mit Bor- oder Phosphorsäure veresterungsfähiger Gruppen, vorzugsweise Hydroxylgruppen, und einen hohen Gehalt an Kohlenstoffatomen besitzen.

Der « Katalysator » (2) sollte sich möglichst bei einer Temperatur, die unter der Zersetzungstemperatur des Karbonific (1) liegt, unter Bildung von möglichst viel Bor- oder Phosphorsäure zersetzen ; z.B. eignet sich Ammoniumorthophosphat.

Das Treibmittel (3) setzt ein nicht entflammbares Gas frei, wobei es zur Schännung und damit zur Bildung einer isolierenden Schicht kommt. Die Zersetzung des Treibmittels (3) sollte gleichzeitig mit der Zersetzung des aus dem Karbonific (1) und der aus dem Katalysator (2) freigesetzten Bor- bzw. Phosphorsäure entstandenen Bor- bzw. Phosphorsäureesters eintreten. Beispiele für bevorzugte Treibmittel sind Guanylharnstoff, Dicyandiamid, Dicyandiamidin, Allophanat, Biuret, Melamin und Harnstoff.

Die Wirkung von Intumeszenz-Anstrichen im Brandfall ist möglicherweise folgende :

Sobald die Zersetzungstemperatur des Katalysators (2) erreicht ist, wird Bor- oder Phosphorsäure freigesetzt, die sich z.T. dann mit dem Karbonific (1) zu einem Bor- bzw. Phosphorsäureester umsetzt. Bei weiterem Temperaturanstieg setzt die Zersetzung dieser Bor- bzw. Phosphorsäureester bei einer Temperatur ein, die gewöhnlich unterhalb der Zersetzungstemperatur des unveresterten Karbonific (1) liegt. Die Zersetzungsprodukte bestehen im wesentlichen aus Kohlenstoff, Wasser, Kohlenoxiden und Bor- oder Phosphorsäure, die wiederum mit unverestertem Karbonific (1) reagieren kann.

Gleichzeitig mit der Zersetzung des Bor- oder Phosphorsäureesters beginnt sich das Treibmittel zu zersetzen und liefert nicht entflammbare Gase, die den kohlenstoffhaltigen Rückstand des Bor- bzw. Phosphorsäureesters blähen und schäumen, so daß sich eine isolierende Schicht bildet. Durch Verwendung von mindestens zwei verschiedenen Treibmitteln mit unterschiedlichen Zersetzungstemperaturen läßt sich die Gasentwicklung verlängern, so daß größere Schaummengen erzeugt werden können.

Intumeszenzmittel sind bekannt ; vgl. z.B. GB-A-755 551, FR-A-2 376 092, US-A-2 632 742, 2 681 326, 2 881 088, 2 956 037, 3 663 267, 3 697 422, 3 733 289, 3 955 987, DE-A-2 704 897. Sie werden im allgemeinen zu Schutzlackierungen auf Holz oder Metall verarbeitet.

Bei Hitzeeinwirkung schmelzen Intumeszenzmittel unter Gasentwicklung auf und beginnen nach Erreichen einer ausreichend niedrigen Viskosität sich zu einem « karbonisierten », d.h. sehr kohlenstoffreichen, relativ flammwidrigen Schaumsystem zu verändern. Dieser Schaumbrennt nur langsam ab und schützt durch seine isolierende Wirkung den Untergrund.

Intumeszenzmittel — entsprechend modifiziert — eignen sich nicht nur für die Herstellung dünner Lackschichten, sondern — z.B. als Kitte — auch dicker Schichten, und man kann sogar das üblicherweise nur im Brandfall zum Tragen kommende Schäumvermögen mit Vorteil zur Herstellung verschäumter Formkörper ausnutzen, wenn man z.B. Granulate solcher Kittmassen (gegebenenfalls in getrocknetem Zustand) in Formen erhitzt.

Von Intumeszenzmitteln, wie sie Ziel der Erfindung sind, werden im wesentlichen folgende Eigenschaften verlangt :

1. Ein technisch den neueren Erfordernissen genügendes Intumeszensmittel sollte weitgehend halogenfrei sein, d.h. nicht oder nur in sehr geringem Masse Halogenträger enthalten, wie z.B. halogenhaltige Weichmacher oder Bindemittel, da Halogenverbindungen im Brandfalle zu Phosgenbildung und erheblichen Korrosionsschäden führen können.

2. Sie sollen — relativ unabhängig vom verwandten Karbonific — in der Hitze gut schäumen.

3. Sie sollen gegen hohe rel. Luftfeuchten beständig sein.

Stärke und insbesondere Cellulose sind Polysaccharide, die in Kombination mit den üblichen Katalysatoren und Treibmitteln schlecht bzw. gar nicht schäumen. Als Feststoffe gehören sie außerdem zu der Karbonific-Klasse, die im allgemeinen ein zusätzliches Bindemittel erfordert, um den Zusammenhalt der einzelnen Komponenten des Intumeszenzmittels zu garantieren. Es hat sich jedoch in der Vergangenheit gezeigt, daß nahezu alle organischen Bindemittel das Aufschäumen von Intumeszenzmit-

teln auf Kohlehydratbasis behindern.

Es wurde nun überraschenderweise gefunden, daß die genannten Forderungen von Intumeszenzmitteln, die als Katalysator Ethylendiammoniumphosphate enthalten, in hervorragender Weise erfüllt werden. Im Stand der Technik (DE-A-1 061 011 und GB-A-1 095 857) wurde Monoammoniumphosphat für den genannten Zweck vorgeschlagen.

Unter « Ethylendiammonium-phosphaten » werden im Sinne der Erfindung Reaktionsprodukte von Ethylendiamin und Phosphorsäuren, wie z.B. Meta-, Ortho-, Pyro- oder Polyphosphorsäure, verstanden, wobei solche Ethylendiammonium-phosphate bevorzugt werden, deren wäßrige Lösungen (Konzentration : 1 Gew.-%) einen pH-Wert von über 6,5, vorzugsweise von 7-8, gemessen bei Raumtemperatur, aufweisen, da dann Säurekorrosionen vermieden werden können. Unter den verschiedenen Phosphorsäuren wird Orthophosphorsäure wegen ihrer leichten Handhabbarkeit bevorzugt.

Gegenstand der Erfindung sind also flammwidrige schäumbare Formmassen auf Basis von Intumeszenzmitteln bestehend aus

(1) mindestens einem Karbonific,
(2) mindestens einem Katalysator,
(3) mindestens einem Treibmittel und gegebenenfalls Füllstoffen, Konservierungsstoffen, Farbstoffen und anderen Hilfsmitteln,

dadurch gekennzeichnet, daß als Katalysator (2) Ethylendiammoniumphosphate verwendet werden.

Karbonific und Treibmittel können gegebenenfalls auch zusammenfallen ; auch kann der Katalysator gegebenenfalls auch Treibmittelfunktionen übernehmen.

Als (1) Karbonific kommen neben den üblicherweise verwendeten Substanzen wie Formaldehydharzen, Paraformaldehyd, Pentaerythrit, Mannit, sonstigen Aldosen oder Ketosen und niedrigen Zuckern, wie z.B. Rohrzucker, gegebenenfalls im Gemisch mit anderen Kohlenstoffquellen (1) nicht kristallisierende zumeist als Gemische vorliegende zuckerähnliche Verbindungen, insbesondere Formosen und/oder deren Ester, z.B. Acetate, Proprionate, Formiate, Benzoate bzw. deren wäßrige Lösungen in Betracht.

Bevorzugte nicht kristallisierende zuckerähnliche Substanzen sind Honig, Melasse, sonstige durch Verkochen oder Extraktion von Zucker enthaltenden pflanzlichen Substraten erhältliche Sirupe, fermentativ hergestellte Zuckersirupe (z.B. aus Stärke hergestellt).

Andererseits sind solche nicht kristallisierenden zuckerähnlichen Substanzen auch erhältlich, indem man zur Kristallisation neigende Verbindungen durch Erhitzen, gegebenenfalls unter Zusatz von Wasser und/oder weiteren Zusatzstoffen, z.B. Phosphaten, in nicht mehr zu Kristallisation neigende Produkte überführt.

Von Bedeutung ist ferner die Verwendung von Formosen und/oder Formoseestern als (1) Karbonific. Formosen sind zuckerähnliche zumeist leicht hydroskopische Substanzgemische, die durch Polykondensation von Formaldehyd, meist an basischen Katalysatoren, erhältlich sind.

Nach einer besonders bevorzugten Ausführungsform wird auf die Verwendung von zerfließlichen (d.h. hygroskopischen) Stoffen, wie z.B. niedermolekulare Alkohole wie Trimethylolpropan, Saccharose, Fructose, Sorbit, als Karbonific (1) verzichtet. Man erhält dann Intumeszenzmittel, die auch bei mehr als 90 % rel. Luftfeuchtigkeit nicht zum Verlaufen, Ausblühen und Ausbluten neigen. Als derartig bevorzugtes Karbonific (1) sind insbesondere Stärke, oder auch Cellulose, andere native hochmolekulare Polysaccharide wie Pullulan oder chitinartige Stoffe, Pentaerythrit, Mannit und Dextrin zu nennen.

Als Stärke und Cellulose sind im Sinne der Erfindungsgedankens auch gemahlene oder zerfaserte Naturstoffe und Vorfabrikate zu verstehen, die im wesentlichen diese Inhaltsstoffe enthalten, wie z.B. Getreidemehl, gemahlene oder zerfaserte Pflanzen oder Pflanzenteile, wie Gras, Laub, Holz, Fruchtkerne, Zellstoff, Holzschliff, Holzmehl, Baumwolle. Besonders gut geeignet sind in Pulverform vorliegende Substrate, obgleich auch faserige Materialien prinzipiell in Betracht kommen, z.B. Papierabfälle, sägespäne.

Die als Katalysatoren (2) eingesetzten Ethylendiammonium-phosphate können in isolierter Form, z.B. als Pulver oder wäßrige Lösung verwandt werden. Empfehlenswert ist eine Arbeitsweise, wonach die Ethylendiammoniumphosphate aus den Komponenten in Gegenwart von Karbonific (1), Treibmitttel (3) und gegebenenfalls Füllstoffen in situ durch einfache Neutralisationsreaktion hergestellt werden. Der Neutralpunkt kann durch Titration leicht ermittelt werden.

Als (3) Treibmittel kommen Ammoniumcarbonat, Ammoniumcarbaminat, Ammoniumformiat, sonstige Ammoniumsalze oder Harnstoff, Biuret, Guanidin, insbesondere Dicyandiamid in Betracht.

Es wurde weiterhin festgestellt, daß bei Verwendung der Ethylendiammoniumphosphate auf ein Karbonific auf Basis von Kohlehydrat o.ä. verzichtet und stattdessen oder zusätzlich als Karbonific auch ein anderes Bindemittel verwendet werden kann, wie z.B. Latices oder Lösungen bzw. verdünnungsmittelfreie Zubereitungen von Vinylpolymeren, etwa Polyvinylacetat oder -chlorid, Polyacrylate, Styrolpolymerisate, Dien- und Olefinpolymerisate, Bindemittel auf Polyester-, Phenolharz-, Harnstoffharz-, Melaminharz-, Epoxydharzbasis (z.B. auf Basis von Umsetzungsprodukten aus Epichlor-hydrin und 4,4'-Dihydroxy-diphenyl-propan) oder auf Basis von Alkydharzen, wie sie als Lackbindemittel verwendet werden. Insbesondere kann als Bindemittel auch ein Isocyanatharz, wie es durch Reaktion von insbesonders aromatischen Polyisocyanaten mit Wasser, Polyalkoholen oder Polyaminen entsteht, verwendet werden. Dies ist deshalb von Interesse, weil einmal aus Bindemitteln auf Basis von z.B. aromatischen Polyisocyanaten durch Wasser (oder Luftfeuchtigkeit) härtbare Intumeszenzmittel zugänglich werden und zum anderen entgegen der Erwartung der Gehalt solcher Intumeszenzmittel an Ethylendiammoniumphosphaten nicht dazu führt, daß die Härtungsreaktion untragbar schnell verläuft oder verhindert wird, sondern den Aufbau von Intumeszenzmittel mit brauchbarer Trockenlagerzeit gestattet, die bei Feuchtigkeitszutritt zu härten beginnen.

Als Karbonific (1) können die technisch leicht zugänglichen Polyisocyanate, wie z.B. Fraktionen der technischen Diphenylmethandiisocyanattherstellung und/oder Isocyanatgruppen-haltige Polyurethane bzw. Polyharnstoffe Verwendung finden. In diesen Fällen kann meist sogar auf ein zusätzliches Treibmittel (z.B. Dicyandiamid verzichtet werden, weil entweder das Karbonific (1) oder der Katalysator (2) die Rolle des Treibmittels mit übernimmt. Dementsprechend schließen die Patentansprüche auch Formmassen ein, die im wesentlichen aus Karbonific (1) und Katalysator (2) bestehen, bei denen dann (1) und/oder (2) als verkapptes Treibmittel vorliegen und dessen Funktion übernehmen können.

Nach einer weiteren besonderen Ausführungsform der Erfindung werden als Füllstoffe Produkte kugeliger oder nahezu kugeliger Gestalt eingesetzt, insbesondere Füllstoffe aus Hohlperlchen.

Obwohl anorganische kugelförmige Füllstoffe wegen ihrer fehlenden Brennbarkeit bevorzugt werden, kommen auch kugel- oder hohlkugelförmige Füllstoffe aus organischem Material in Betracht, z.B. aus vernetztem oder unvernetztem Polystyrol oder Polyethylen, Phenolharz oder Polyvinylchlorid. Das Material, aus dem die kugelförmigen Teilchen bestehen, sollte wasserunlöslich sein.

Quarz- bzw. Kieselsäurekugeln, Glaskugeln, Flugaschenkügelchen sowie vor allem Kugeln aus Alumosilikaten seien besonders erwähnt. Kugeln und Hohlkugeln dieser Art sind gut zugänglich. Die Teilchengröße kann bis zu 800 Mikron und mehr betragen ; vorzugsweise werden Teilchengrößen zwischen 5 und 500 Mikron eingesetzt.

Die kugeligen Füllstoffteilchen können in Verbindung mit nicht kugeligen Füllstoffen oder auch in Verbindung mit organischen oder anorganischen Fasern Verwendung finden. Vorzugsweise werden sie jedoch als alleiniger Füllstoff verwendet.

Die kugelförmigen bzw. nahezu kugelförmigen Füllstoffe können in Mengen von 1-80, vorzugsweise 20-70, Gew.-%, bezogen auf die erfindungsgemäße Formmasse, verwendet werden.

Obgleich die Mitverwendung von sonstigen Füllstoffen wie Glas-, Kohle- oder Mineralfasern, Kreide, Gesteinsmehl, Talkum, Perlit, Vermikulit, Asbest, Kaolin, Kieselsäure, Ton, Kohlenstoff, Magnesiumoxid, Aluminiumoxide, Eisenoxide zur Verminderung des Aufschäumens führt, ist deren Mitverwendung durchaus in Betracht zu ziehen, vor allem dort, wo vermindertes Aufschäumen in Kauf genommen werden kann.

Wenn man die füllstoff- und hilfsmittelfreien Intumeszenzmittel als wasserfreie Substanz zugrunde legt, dann sind in ihnen die Einzelkomponenten in folgenden Mengenverhältnissen (1) bis (3) enthalten :

(1) Karbonific : 0,1-80, vorzugsweise 3,5-70, Gew.-Teile
(2) Katalysator : 5-70, vorzugsweise 15-50, Gew.-Teile
(3) Treibmittel : 5-70, vorzugsweise 15-50, Gew.-Teile

Die erfindungsgemäßen Formmassen werden vorzugsweise mit der wäßrigen Lösung einer der Komponenten gebunden. Daher kann man die Konsistenz leicht durch den Wassergehalt ändern. Die Konsistenz kann von hart bis plastisch oder weich variiert werden, so daß alle Applikationsweisen möglich sind, d.h. Verarbeitung durch kaltes oder warmes Verpressen (z.B. bei 5-150 °C), durch Extrusion z.B. bei der Herstellung von mit dem Intumeszenzmittel gefüllten Profilen oder Schläuchen, mit den Methoden des Maurerhandwerks oder mittels Kittpistolen oder durch Auftrag mit Pinsel, Rolle oder Spritzgerät.

Man kann auch mit organischen Bindemitteln, z.B. Vaseline, gesättigten und/oder ungesättigten Polyesterharzen mit flüssigem bis zäh-hartem Charakter, z.B. auf Basis von Phthalsäure, Adipinsäure, Malein-, Fumarsäure und Ethylenglykol, Propylenglykol, Glycerin oder Trimethylolpropan, Polyvinylacetatdispersionen, Ethylen/Vinylacetat-Copolymerisaten, oder, falls Halogen nicht stört, mit weichmacherhaltigen PVC-Pasten als Bindemittel arbeiten.

Man kann aus den erfindungsgemäßen Formmassen, z.B. durch Verpressen oder Giessen und Gelieren durch Hitze oder Trocknen, Formkörper fabrizieren, die bei Temperaturen, z.B. über 200 °C aufschäumen und so eine Flammenausbreitung verhindern, die also als Dichtelemente, Sicherungsvorrichtungen, Brandsperren, geeignet sind. Man kann Verfugungen vornehmen, Kabeldurchbrüche zumörteln, wobei z.B. auch eine Art Beton aus dem angeteigten Intumeszenzmittel und Steinen und/oder geblähten Teilchen wie Blähton, Blähglas, Perlit u.ä. und/oder auch Schaumstoffperlen auf z.B. Polystyrolbasis hergestellt und verwendet werden können.

Ebenfalls ist von Interesse die Herstellung von gegebenenfalls armierten Beschichtungen nahezu beliebiger Dicke auf Metall, z.B. Stahlträgern und -blechen, Holz, z.B. Türblättern, Dachbalken, auf Mauerwerk, auf Kunststoffen, seien es Kabelisolierungen oder Schaumstoffplatten. Wenn man die Beschichtung auf einer tragfähigen Platte oder Stützkonstruktion vornimmt, z.B. in bzw. auf einer Reckmetallplatte, einer Wabenplatte aus Metall, Pappe, Papier, Holz, Keramik oder Kunststoff, dann

4

können so leicht feuerhemmende Platten oder Wandelemente hergestellt werden. Auch die Innenbeschichtung von feuerhemmenden Türen, die im Brandfall aufschäumt und isolierend wirkt, ist in Betracht zu ziehen, desgleichen die Herstellung von Tür- oder sonstigen dichtungen, die im Brandfall aufschäumen und den vorgelagerten Schlitz abdichten. Man kann auch Dichtprofile, z.B. aus elastischem Material, mit den erfindungsgemäßen feuchten oder trockenen Formmassen füllen oder hinterfüllen und so eine Brandschutzdichtung erzielen. Durch geeignete Anordnung kann man in Kaminen, Lüftungs- und Klimaanlagen, Rohrleitungen und Ein/Austrittsöffnungen Sperren aufbauen, die im Fall einer Erhizung auf ca. 250 °C den Durchtritt von Gasen bremsen oder verhindern. Solche Anordnungen sind z.B. Stapel von in geringen Abständen parallel liegenden Platten, mit den Formmassen beschichtete Siebe und Lochblenden oder mit Granulaten der Formmassen locker gefüllte Rohrabschnitte.

Zur Herstellung von Schaumstoffen werden die Massen in feuchtem, oder vorzugsweise möglichst trockenem, Zustand eingesetzt.

Man kann z.B. Formkörper, die durch warmes oder kaltes Verformen der Formmasse leicht herstellbar sind, oder auch Granulate verschiedenster Körnung ein- oder mehrstufig verschäumen, indem man sie auf Temperaturen über 180-250 °C erhitzt, vorzugsweise auf Temperaturen zwischen 250 und 1 800 °C, insbesondere 250-800 °C. Die Verschäumung kann frei oder in geschlossenen oder offenen Formen vorgenommen werden, wobei diese Formen zweckmäßigerweise Öffnungen zum Austritt von Dampf und Luft aufweisen sollten.

Das Erhitzen kann durch Strahlungswärme, durch Behandeln mit Heißdampf oder Heißluft oder sonstigen heißen Gasen, durch Mikrowellen oder Hochfrequenz bzw. durch Wärmeleitung in Luft oder Flüssigkeitsbädern bzw. Metallbädern geschehen.

Man kann die erfindungsgemäßen Formmassen auch auf Trägermaterialien aufbringen und dort verschäumen, z.B. indem man Blähtonteilchen beschichtet, dann in eine Form schüttet und dort erhitzt, wobei ein Block aus in Carbonisierungsschaum eingebettetem Blähton entsteht. Eine entsprechend beschichtete Holz- oder Einsenplatte kann bei 250 °C zu einer Schaumstoffkombinationsplatte verarbeitet werden, wobei die Schaumstoffoberfläche durch eine weitere Holz- oder Eisenplatte abgedeckt sein kann.

Zu erwähnen ist auch das Ausschäumen von Hohlräumen in Ziegelsteinen und sonstigen Baustoffen, was z.B. durch Einbringen der feuchten oder granulierten Formmassen in geeigneter Menge in den Hohlraum des noch kalten oder noch heißen Steines gelingt.

Da der Füllstoffanteil der erfindungsgemäßen Formmassen zu einer erheblichen Oxidationsbeständigkeit und Wärmebeständigkeit der erhältlichen Schaumstoffe führt, sind diese in Form von Rohrhalbschalen oder von Vollmänteln zur Hochtemperaturisolierung von Rohren geeignet. Von Interesse ist, daß die Isolierung auch in situ vorgenommen werden kann, indem man das Rohr oder das zu isolierende Stück mit der Formmasse beschichtet und durch Erhitzen von innen heraus oder durch Aufheizen von außen, z.B. mittels Heißluft oder Gebläseflamme, zum Aufschäumen bringt.

Die Raumgewichte der Schaumstoffe liegen zwischen ca. 900 und ca. 10 kg/m$^3$, vorzugsweise zwischen 50 und 500 kg/m$^3$. Sie sind bei gegebener Rezeptur abhängig von der Heiztemperatur und von der Intensität der Aufheizung. Zum Beispiel wird bei 200 oder 250 °C ein höheres Raumgewicht erhalten als bei 350 oder 500 °C. Allerdings wird bei langsamem Aufheizen auf z.B. 500 °C ein höheres Raumgewicht erhalten als beim Aufheizen durch direkten Flammenkontakt.

Die in den folgenden Beispielen angegebenen Teile und Prozente beziehen sich auf das Gewicht, falls nichts anderes vermerkt ist.

Beispiele

Beschreibung der Versuchstechnik :

Die einzelnen pulverisierbaren Komponenten wurden auf einer Porzellan-Kugelmühle 10 Stunden lang vermahlen. Auf einem 500 ml-Laborkneter wurden dann die pulverförmigen Komponenten bei Raumtemperatur mit den flüssigen Komponenten abgemischt und 15 Minuten nachgeknetet. Die Konsistenz des Knetgutes wurde zumeist durch Zufügen der flüssigen Komponente oder von Wasser eingestellt.

Zur Prüfung des Verhaltens in der Wärme wurden 2 Gramm des Prüfgutes zu einer Kugel geformt und im Trockenschrank getrocknet.

Das Aufschäumen wurde an getrockneten Probekörpern durch Einbrigen in einen 260 °C-Schrank getestet. Desgleichen wurden diese Probekörper einer Erdgas-Bunsenflamme ausgesetzt.

Das Aufschäumen wurde wie folgt beurteilt :

|  |  | Index |
| --- | --- | --- |
| bis Volumenverdoppelung | mässig | (3) |
| bis Volumenverdreifachung | gut | (2) |
| mehr als Volumenverdreifachung | sehr gut | (1) |

Zur Prüfung des Verhaltens bei Feuchtlagerung wurden aus dem Prüfgut Würfel mit einer Kantenlänge von 2 cm geformt und auf eine Petrischale gesetzt. Dann wurde die Schale in ein verschließbares Gefäß gebracht, das die Form eines Eimers mit Deckel hatte und dessen Boden ca. 5 cm hoch mit Wasser bedeckt war. Die Petrischale befand sich ca. 10 cm oberhalb des Wasserspiegels. Dann wurde der Eimer verschlossen und 10 Tage bei 25 °C stehengelassen. Danach wurde das Erscheinungsbild des Würfels beurteilt:

|  |  | Index |
|---|---|---|
| Würfel zusammengefallen und verlaufen | schlecht | (5) |
| Absonderung von Sekret, Würfel steht | schlecht | (4) |
| Würfel stark erweicht, kein Sekret | mäßig | (3) |
| Würfel standfest | gut | (2) |

Die Herstellung der Phosphate wurde durch Neutralisation der Amine mit Orthophosphorsäure in wäßrigem Medium, Trocknen und Mahlen vorgenommen. Die Komponenten werden dann gemeinsam in der Kugelmühle nochmals vermahlen.

Die Feuchtlagerung wird in der beschriebenen Apparatur vorgenommen und die Gewichtszunahme nach 4 Tagen festgestellt:

Mischungszusammensetzung:

1 Teil Maisstärke
1 Teil Dicyandiamid
1 Teil Phosphat

| Phosphat von |  | Gewichtszunahme % |
|---|---|---|
| prim. Ammoniumphosphat |  | 7 |
| sek. Ammoniumphosphat |  | 10 |
| Ethylendiamin | techn. | 3 |
| Diethylentriamin | techn. | 20 |
| Triethylentetramin | techn. | 15 |
| Tetraethylenpentamin | techn. | 23 |
| Pentaethylenhexamin | techn. | 17 |

## Beispiel 1

Die voranstehende Übersicht zeigt das überraschend gute Verhalten des Ethylendiammoniumphosphates bei Feuchtlagerung. Der folgende Vergleich der Katalysatorwirksamkeit dieses Salzes mit der des prim. Ammoniumphosphates verdeutlicht die unerwartete Überlegenheit des Ethylendiammonium-phosphats:

Gleiche Teile von je 20 % Stärke, Dicyandiamid und Phosphat sowie 40 % Silikathohlperlen wurden gut vermischt und mit 10 %igem wäßrigem Stärkekleister zu einem Kitt verknetet.

Beurteilung der Prüfkörper:

|  | prim. Ammoniumphosphat | Ethylendiammoniumphosphat |
|---|---|---|
| Flamme | 2 | 1 |
| 250 °C | 3 | 1 |

## Beispiel 2

10 Teile technisches Ethylendiamin wurden mit 18,9 Teilen 85 %iger technischer Orthophosphorsäure umgesetzt. Das entstandene Salz hatte in 1 %iger wäßriger Lösung einen pH-Wert von 7. Das pulverisierte Salz wurde mit 30 Teilen Kartoffelstärke und 20 Teilen Dicyandiamid sowie 23 Teilen Wasser zu einem Kitt verknetet. Im Feuchtlagerungsversuch wurde die Beurteilung 2 erreicht. Bei Gewichtskontrolle wurde keine Gewichtszunahme im Feuchtklima festgestellt.

Bei Verwendung von einer gleichen Gewichtsmenge prim. Ammoniumphosphats anstelle von Ethylendiammoniumphosphat wurde in der Feuchtlagerung eine Beurteilung von 3 festgestellt, bei Einsatz von neutralem Triethylentetraammoniumorthophosphat anstelle des Ethylendiammoniumphosphates sogar nur von 4.

Der Ersatz des Dicyandiamids durch Harnstoff führte ebenfalls zur Verschlechterung der Feuchtlagerungsergebnisse um einen Indexpunkt.

Beurteilung der Flamme: 1 Beurteilung bei 250 °C : 1

## Beispiel 3

Im folgenden soll gezeigt werden, daß die Verwendung von Ethylendiammoniumphosphat auch bei nicht wäßrigen Formulierungen zu sehr guten Ergebnissen führt.

Ethylendiamin wurde mit soviel $H_3PO_4$ versetzt, daß ein im wäßrigen Medium einen pH von 7-7,5 aufweisendes Salzgemisch entstand. Anschließend wurde das Phosphat getrocknet, 10 Teile dieses Salzes, 10 Teile Stärke und 10 Teile Dicyandiamid wurden in einer Kugelmühle fein vermahlen. Das Pulver wurde dann mit technischer Vaseline zu einem Kitt angerieben (ca. 10 Teile). In der Feuchtlagerung ergab der Kitt eine Beurteilung nach dem aufgeführten Index von 2.

Aufschäumverhalten bei 250 °C : 1

Flamme : 1 (kein Brennen bei Entfernung der Flamme !)

Verwendet man anstelle der Vaseline ein Copolymerisat aus Ethylen und ca. 45 % Vinylacetat (Molekulargewicht etwa 2000), so erhält man folgende Beurteilung :

| | |
|---|---|
| Feuchtlagerung | 2 |
| Aufschäumverhalten bei 250 °C | 2 |
| Flamme | 2 |

## Beispiel 4

In einen Kneter wurden eingebracht : 5 Teile Ethylendiamin, 15 Teile Stärke (Mais), 10 Teile Dicyandiamid. Es bildete sich ein pulveriges Gemisch.

Dann wurden im Laufe von 15 Minuten eingebracht : 9,45 Teile 85 %ige Orthophosphorsäure. Unter Erwärmung bildete sich ein pulveriges Gemisch, das nach ca. 15 minütigem Kneten und Mischen in Wasser eingebracht, einen pH-Wert von 7 Zeigte.

5 Teile dieses Gemisches wurden mit 2,3 Teilen Desmophen 800®, einem flüssigen Polyester der Bayer AG, zu einem Kitt angemischt. Dieser Kitt ergibt folgende Beurteilung :

| | |
|---|---|
| Feuchtlagerung | 2 |
| Aufschäumen 250 °C | 1 |
| Flamme | 1 |

## Beispiel 5

a) Wie Beispiel 4, aber Anteigen mit ca. 1,6 Teilen Wasser. Der Schäumtest führte zu gleichartiger Beurteilung.

b) Wie Beispiel 4, aber Anteigen mit 2, 3 Teilen Lekutherm X 80® einem aromatischen Epoxydharz der Bayer AG. Der Schäumtest führte zu gleichartiger Beurteilung.

## Beispiel 6

Verknetet man 5 Teile des Gemisches von Beispiel 4 zunächst mit 1 Teil Vaseline und anschließend mit 1,6 Teilen Wasser, erhält man einen Kitt mit hervorragender Verarbeitbarkeit und ebenfalls gleichartiger Beurteilung.

## Beispiel 7

30 Teile handelsübliches Weizenauszugsmehl wurden mit 20 Teilen Ethylendiamin und anschließend 18,9 Teilen 85 %iger $H_3PO_4$ sowie 30 Teilen Silikathohlperlen (Fillite 52/75®, Fillite Ltd.) gemischt.

5 Teile des enststandenen pulverigen Produktes wurden anschließend mit 10 %igem wäßrigem Stärkekleister (5 Teile) zu einem Kitt verknetet.

Es wurde folgende Beurteilung erhalten :

| | |
|---|---|
| Feuchtlagerung | 2 |
| Flamme | 1 |
| 250 °C | 1 |

## Beispiel 8

Wie Beispiel 7, nur wurde anstelle des Weizenmehls jetzt Holzmehl verwendet :

| | |
|---|---|
| Feuchtlagerung | 2 |

0 026 857

Flamme 1
250° 2

Beispiel 9

Wie Beispiel 7, nur wurde anstelle der Silikathohlperlen Cellulosepulver (Typ 123, Schleicher & Schüll) verwendet :

Feuchtlagerung 2
Flamme 1
250° 2

Beispiel 10

Wie Beispiel 7, nur wurde anstelle von Weizenmehl eine Abmischung von gleichen Teilen Stärke und Holzschliff verwendet.

Feuchtlagerung 2
Flamme 2
250° 2

Im folgenden soll die Herstellung von Formkörpern und Schaumstoffen aus den erfindungsgemäßen Formmassen beispielhaft beschrieben werden. Hierzu wird die in Beispiel 7 beschriebene Mischung verwendet. Prinzipiell sind jedoch alle anderen beispielhaft erläuterten Gemische auch analog verwendbar.

Beispiel 11

Die in Beispiel 7 beschriebene kittartige Masse wurde bei 75 °C getrocknet und granuliert. Das Granulat mit einem mittleren Korndurchmesser von ca. 5 mm wurde auf eine Holzspanplatte aufgestreut und mit einem auf 180 °C beheizten Stempel einer Plattenpresse auf der Spanplatte verpreßt. Hierbeit entstand auf der Plattenoberfläche eine homogene Beschichtung aus der Intumeszenzmasse. Bei Beflammung schäumte die Beschichtung auf und schützte das darunterliegende Material.

Beispiel 12

Das Granulat (Beispiel 11) wurde auf 100 °C vorgeheiz und auf einer Stempelpresse bei 180 °C zu Platten verpreßt. In warmen Zustand (ca. 120 °C) liessen sich diese Platten thermoplastisch weiterverformen, z.B. zu Rohrhalbschalen. Mit diesen Halbschalen, die in einer geeigneten Form aus dem Granulat analog zu der Plattenware hergestellt wurden, lassen sich gegen Feuereinwirkung zu schützende Leitungen ummanteln. Bei Beflammung schäumen sie auf und schützen das darunterliegende Material.

Beispiel 13

Die Kittmasse (Beispiel 7) wurde mittels eines Extruders bei 95 °C zu einem Rohr mit 2 cm Durchmesser und 0,5 cm Wandstärke extrudiert. Das Rohr wurde mit Luf gekühlt und getrocknet. Abschnitte derartiger Rohre werden für Kabeldurchführungen durch Brandabschnitte verwendet und verschließen sich durch Aufschäumen, wenn die Temperatur über 260 °C ansteigt.

Beispiel 14

Eine Sperrholzplatte von ca. 5 mm Stärke wurde mit Löchern von 5 mm Durchmesser versehen, so daß die Löcher jeweils ca. 1,5 cm voneinander entfernt waren, d.h. eine regelmäßige Lochplatte entstand. Die Platte wurde nun mit der Kittmasse gemäß Beispiel 7 durch Rakeln bzw. Spachteln beidseitig 8 mm dick beschichtet und getrocknet. Derartige Platten werden als feuerdämmende Platten z.B. in Türkonstruktionen eingesetzt. Beim Erhitzen über 250 °C schäumte die Beschichtung auf und schützt das dahinterliegende Material durch Isolation. Gleichermaßen geschützt werden Stahlträger, auf die die Masse gemäß Beispiel 7 aufgeputz worden ist.

Beispiel 15

Das Granulat gemäß Beispiel 11 wurde in eine zylindrische Stahlform ∅ 6 cm, Höhe 20 cm) locker eingefüllt, so daß die Form etwa zu 50 % gefüllt ist. darin wurde auf 280 °C im Heißluftofen erhitzt. Nach 15 Minuten wurde die Form abgekühlt. Man erhielt einen Schaumstoffzylinder, bei dem die ursprünglichen Korngrenzen beim Aufschäumen ineinander geflossen sind und der daher einen weitgehend honogenen Aufbau hatte. Der Zylinder wurde unter Stickstoff 30 Minuten bei 400 °C getempert. Sowohl der getemperte wie der ungetemperte Schaumstoffrohling (Raumgewicht ca. 150 kg/m³) kann als Ausgangsmaterial zur Herstellung von Rohrhalbschalen für die Isolierung von Rohren mit Temperaturen über 300 °C verwendet werden.

Beispiel 16

Eine ca. 5 mm dicke Platte gemäß Beispiel 12 wurde in einem handelsüblichen Mikrowellenofen erhitzt. Dabei schäumte sie auf und ergab eine Schaumstoffplatte mit einem Raumgewicht von ca. 200 kg/m³.

Beispiel 17

Ein Eisenrohr (∅ 3 cm) wurde bei 50 °C mit der Kittmasse gemäß Beispiel 7 äußerlich ca. 3 mm Stark beschichtet. Nach dem Trocknen bei 120 °C wurde das Rhor in einen Heißluftofen mit einer Lufttemperatur von ca. 300 °C gebracht. Hierbei schäume die Beschichtung auf und bildete eine isolierende Rohrummantelung. Man erhält ebenfalls eine isolierende Ummantelung, wenn das beschichtete Rohr von innen mit der Heißluft oder einem flüssigen Heizmittel von 250-350 °C durchströmt wird. Die Isolationsschicht hat eine Dicke von etwa 10 mm.

Beispiel 18

Hier soll gezeigt werden, daß als Karbonific auch ein Isocyanatbindemittel an Stelle des Kohlehydrats verwendet werden kann.

30 Teile Silikathohlperlen gemäß Beispiel 7 wurden mit 15 Teilen Ethylendiaminammoniumphosphat-Pulver vermischt, das durch Umsetzung von 20 Teilen Ethylendiamin mit 18,9 Teilen 85 %iger technischer Phosphorsäure, anschließendes Trocknen bei 150 °C und Mahlen in der Kugelmühle hergestellt wurde.

Diese Mischung wurde zu kittartiger Konsistenz mit ca. 20 Teilen Desmodur 44 V 40®, einer aromatischen Polyisocyanatfraktion der Bayer AG, angeteigt, wobei der Zutritt von Luftfeuchtigkeit vermieden wurde.

Die so erhaltene Form war nach 2-tätiger Lagerung unter Luftabschluß bei ca. 60 °C noch glatt verarbeitbar. Bei Zutritt von Luftfeuchtigkeit erhärtete sie im Laufe von wenigen Tagen am Einbauort. Vermischte man sie mit ca. 10 % Wasser vor dem Einbau, so erfolgt die Erhärtung über Nacht.

Eine 5 mm dicke Platte aus der ausgehärteten Form wurde einseitig mit der Flamme eines Bunsenbrenners beaufschlagt. Dabei blähte sie sich unter Ausbildung eines feuerhemmenden Schaumes auf ca. 1,5 m Dicke auf.

Bei der Feuchtlagerung wurde die Beurteilung 2 erzielt, beim Aufschäumen in der Flamme die Beurteilung 2.

**Ansprüche**

1. Flammwidrige schäumbare Formmassen auf Basis von Intumeszenzmitteln bestehend aus

(1) mindestens einem Karbonific,
(2) mindestens einem Katalysator,
(3) mindestens einem Treibmittel und gegebenenfalls Füllstoffen, Konservierungsstoffen, Farbstoffen und anderen Hilfsmitteln,

dadurch gekennzeichnet, daß als Katalysator (2) Ethylendiammoniumphosphate verwendet werden.

2. Formmassen nach Anspruch 1, dadurch gekennzeichnet, daß als Karbonific (1) Stärke und/oder Cellulose eingesetzt wird.

3. Formmassen nach Ansprüchen 1 und 2, dadurch gekennzeichnet, daß als Treibmittel (3) Dicyandiamid eingesetztz wird.

4. Formmassen nach Ansprüchen 1-3, dadurch gekennzeichnet, daß als Katalysator (2) das Reaktionsprodukt aus Ethylendiamin und Orthophosphorsäure eingesetzt wird.

5. Formmassen nach Ansprüchen 1-4, dadurch gekennzeichnet, daß der Katalysator (2) in wäßriger Lösung einen pH-Wert von 6,5-8 aufweist.

6. Formmassen nach Ansprüchen 1-5, dadurch gekennzeichnet, daß sie die Komponenten (1) bis (3) im Verhältnis

0,1 bis 80 Gewichtsteile (1)
5 bis 70 Gewichtsteile (2) und
5 bis 70 Gewichtsteile (3) enthalen.

7. Formmassen nach Ansprüchen 1-6, dadurch gekennzeichnet, daß sie die Komponenten (1) bis (3) im Verhältnis

3,5 bis 70 Gewichtsteile (1),
15 bis 50 Gewichtsteile (2) und
15 bis 50 Gewichtsteile (3) enthalten.

8. Formmassen nach Ansprüchen 1-7, dadurch gekennzeichnet, daß als Karbonific (1) ein Isocyanatharz verwandt und auf ein zusätzliches Treibmittel (3) verzichtet wird.

9. Verfahren zur Herstellung der Formmassen nach Ansprüchen 1-8, dadurch gekennzeichnet, daß man die einzelnen Komponenten auf an sich bekannte Weise mischt.

10. Formmassen nach Ansprüchen 1-8, dadurch gekennzeichnet, daß als Füllstoffe Silikat-Hohlperlen verwendet werden.

11. Verwendung der Formmassen nach Ansprüchen 1-8 zur Herstellung von Überzügen, Kitten, Schaumstoffen, Formkörpern.

## Claims

1. Non-inflammable foamable moulding compositions based on intumescent agents consisting of

(1) at least one carbonific
(2) at least one catalyst
(3) at least one blowing agent and optionallyfillers, preservatives, dyes and other auxiliary agents, characterised in that ethylene diammonium phosphates are used as the catalyst (2).

2. Moulding compositions according to Claim 1, characterised in that the carbonific (1) is starch and/or cellulose.

3. Moulding compositions according to Claims 1 and 2, characterised in that blowing agent (3) is dicyandiamide.

4. Moulding compositions according to Claims 1 to 3, characterised in that the catalyst (2) used is the reaction product of ethylene diamine and orthophosphoric acid.

5. Moulding compositions according to Claims 1 to 4, characterised in that the catalyst (2) has a pH of from 6.5 to 8 in aqueous solution.

6. Moulding compositions according to Claims 1 to 5, characterised in that they contain components (1) to (3) in the following proportions :

0.1 to 80 parts by weight of (1),
5 to 70 parts by weight of (2) and
5 to 70 parts by weight of (3).

7. Moulding compositions according to Claims 1 to 6, characterised in that they contain components (1) to (3) in the following proportions :

3.5 to 70 parts by weight of (1),
15 to 50 parts by weight of (2) and
15 to 50 parts by weight of (3).

8. Moulding compositions according to Claims 1 to 7, characterised in that an isocyanate resin is used as the carbonific (1) and no additional blowing agent (3) is used.

9. A method for the preparation of the moulding compositions according to Claims 1 to 8, characterised in that the individual components are mixed together in known manner.

10. Moulding compositions according to Claims 1 to 8, characterised in that the fillers used are hollow silicate beads.

11. The use of the moulding compositions according to Claims 1 to 8 for the production of coatings, putties, foams and shaped products.

## Revendications

1. Matières à mouler gonflables en mousse et ignifuges à base de produits intumescent consistant en

(1) au moins un carbonific,
(2) au moins un catalyseurs,
(3) au moins un agent gonflant et le cas échéant des

matières de charge, des préservateurs, des colorants et d'autres produits auxiliaires, caractérisées en ce que l'on utilise en tant que catalyseur (2) des phosphates d'éthylène-diammonium.

2. Matières à mouler selon la revendication 1, caractérisées en ce que l'on utilise en tant que carbonific (1) de l'amidon et/ou de la cellulose.

3. Matières à mouler selon les revendications 1 et 2, caractérisées en ce que l'on utilise en tant qu'agent gonflant (3) le dicyanodiamide.

4. Matières à mouler selon les revendications 1 à 3, caractérisées en ce que l'on utilise en tant que catalyseur (2) le produit de réaction de l'éthylène-diamine et de l'acide orthophosphorique.

5. Matières à mouler selon les revendications 1 à 4, caractérisées en ce que le catalyseur (2) présente un pH de 6,5 à 8 en solution aqueuse.

6. Matières à mouler selon les revendications 1 à 5, caractérisées en ce qu'elles contiennent les composants (1) à (3) dans les proportions suivantes :

0,1 à 80 parties en poids de (1)
5   à 70 parties en poids de (2) et
5   à 70 parties en poids de (3).

7. Matières à mouler selon les revendications 1 à 6, caractérisées en ce qu'elles contiennent les composants (1) à (3) dans les proportions suivantes :

3,5 à 70 parties en poids de (1),
15   à 50 parties en poids de (2) et
15   à 50 parties en poids de (3)

8. Matières à mouler selon les revendications 1 à 7, caractérisées en ce que l'on utilise en tant que carbonific (1) une résine d'isocyanate en supprimant un agent gonflant additionnel (3).

9. Procédé de préparation des matières à mouler selon les revendications 1 à 8, caractérisé en ce que l'on mélange les composants individuels de manières connue en soi.

10. Matières à mouler selon les revendications 1 à 8, caractérisées en ce que l'on utilise en tant que matières de charge des perles creuses de silicate.

11. Utilisation des matières à mouler selon les revendications 1 à 8 pour la préparation de revêtements, de mastic, de matières-mousses, d'objets moulés.